# EUROPEAN PATENT APPLICATION

(11) **EP 1 739 557 A1**
(43) Date of publication of application: **03.01.2007**
(21) Application number: 05291413.2
(22) Date of filing: 30.06.2005
(51) Int. Cl.: G06F 11/34

(54) **Method for analyzing browsing and device for implementing the method**

(71) Applicant: Nortel Networks Limited, St.Laurent, Quebec H4S 2A9 (CA)
(72) Inventor: Jouglet, Jérémy, 78990 Elancourt (FR); Eisenmann, Pierre, 75013 Paris (FR); Portillo, Rafael, 28010 Madrid (ES)
(74) Representative: Loisel, Bertrand

(57) **Abstract**

For analyzing browsing taking place within the framework of a communication session carried by at least one communication interface, said communication session comprising at least one transfer protocol transaction involving a resource locator: a trace is captured on said communication interface; at least one transaction is identified from the trace and each identified transaction is memorized with associated information; each identified transaction is associated with the session it belongs to; for each session, constructing a graph, each node (21) of the graph representing a resource locator and each link (22) of the graph, connecting two nodes, representing a relationship between said two nodes, said relationship relating to a transaction associated with said session and involving the resource locator represented by at least one of said two nodes; and browsing information is derived from at least one of the constructed graphs.

## Description

The present invention relates to browsing analysis.

Browsing is a common way of accessing information, such as Web, WAP (Wireless Application Protocol) or i-mode™ (trademark) pages.

A user, or client, having a device equipped with a browser can thus easily download information from a server, e.g. through a wired or wireless communication network, and get a pleasant presentation and processing of the information.

In particular, the use of a browser compatible with a hypertext transfer protocol, such as HTTP, enables to navigate from page to page with a minimum of efforts.

Unfortunately, it is not possible today to get relevant information about browsing, because it depends on many different factors, some of which are not directly observable.

For example, it is known to place a sensing device into a server, in order to determine a time response of the server upon reception of a request from a distant user. This helps analysing the behavior of the server and detecting potential problems. However, such sensing only delivers limited information and does not give and end-user perception.

It is also known to use an end-user test device provided with specific software, like a laptop or a trace mobile, in order to have an end-user perception. However, the noted behavior highly depends on the test device performances and is not necessarily representative of the perception a "real" user would have.

An object of the present invention is to overcome the disadvantages of the known methods, to obtain a better browsing analysis.

A more particular object of the invention is to get a reliable and accurate end-user perception relating to browsing.

The invention thus proposes a method for analyzing browsing, said browsing taking place within the framework of at least one communication session carried by at least one communication interface, said at least one communication session comprising at least one transfer protocol transaction involving a resource locator. The method comprises the following steps:
/a/ capturing a trace on said communication interface;
/b/ identifying at least one transaction from the trace and memorizing each identified transaction with associated information;
/c/ associating each identified transaction with the session it belongs to;
/d/ for each session, constructing a graph, each node of the graph representing a resource locator and each link of the graph, connecting two nodes, representing a relationship between said two nodes, said relationship relating to a transaction associated with said session and involving the resource locator represented by at least one of said two nodes; and
/e/ deriving browsing information from at least one of the constructed graphs.

Such analysis of graphs constructed from transfer protocol transactions and related resource locators detected in a captured trace gives access to browsing information which is normally not known because it is not observable through conventional tools. In particular, the derived browsing information can give an end user perception of downloads.

The browsing information obtained can be of any type according to the envisaged application. In particular, it can concern a single user or group of users. But it can also relate to a plurality of users on a statistical basis.

The browsing information can even be used for advanced applications, like troubleshooting detection, validation of the configuration of a communication system including said communication interface or transaction based billing.

The invention also proposes a computer program product comprising code instructions for implementing the above-mentioned method, when it is loaded and executed by computer means.

The invention also proposes a device comprising means for implementing the above-mentioned method.

Other specific features and advantages of the present invention will be presented in the following description of non-limiting embodiments, with reference to the appended drawings, in which:
- FIG.1 is a schematic architecture of a communication system in which the invention can take place;
- FIG.2 is an example of a set of information which can be stored in association with a transaction according to the invention;
- FIG.3 is an example of a simple communication between a client and a server;
- FIG.4 is a schematic representation of a graph constructed according to the invention;
- FIG.5 is an example of a graph constructed in relation with a simple communication session;
- FIG.6a-6c show successive steps of the construction of a graph according to the invention for a communication session example;
- FIG.7 represents successive transmissions within the framework of a communication session, and
- FIG.8 is a schematic representation of an impatience function obtained from constructed graphs according to the invention;

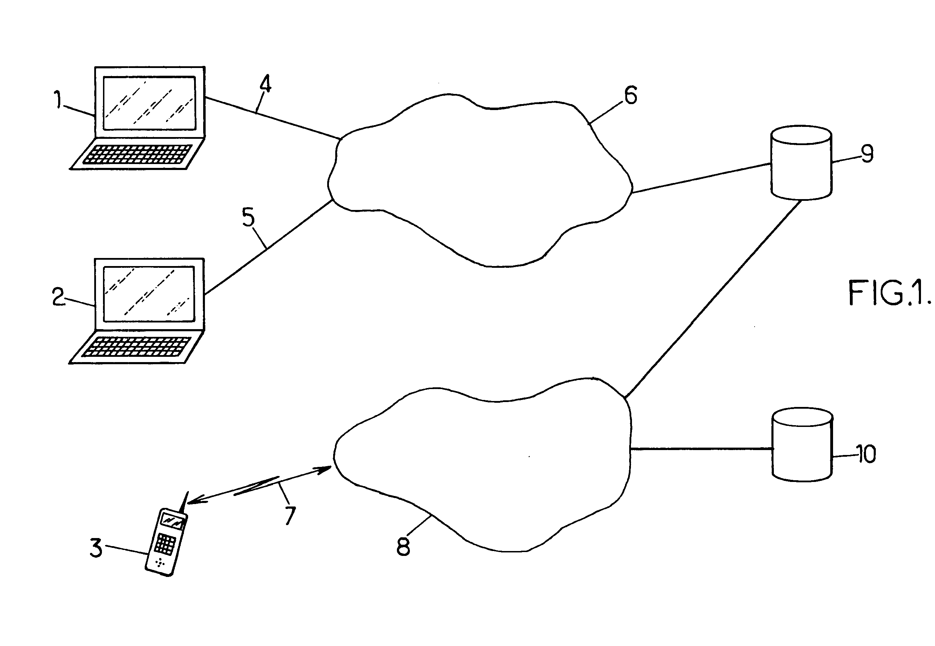

FIG.1 schematically illustrates a communication system architecture. In this system, fixed terminals 1-2, e.g. computers, are capable of exchanging information with a distant server 9, through a fixed network-6, e.g. an IP (Internel Protocol) network, to which they are connected via respective links 4-5.

In this system, there is also a mobile terminal 3 able to exchange information with the server 9 or another server 10, through a wireless network 8 to which it is connected via a radio link 7. The wireless network can be a cellular network for instance, such as a GSM/GPRS (Global System for Mobile communications / General Packet Radio Service), a UMTS (Universal Mobile Telecommunication System) or a CDMA network (Code Division Multiple Access).

A transmission between some of the terminals 1-3 and the servers 9-10 uses a transport protocol, such as the well-known TCP protocol (Transmission Control Protocol). TCP is a connection oriented and highly-reliable transport protocol, in which every single byte is acknowledged during a transfer.

A transmission between some of the terminals 1-3 and the servers 9-10 also uses an application protocol, such as HTTP (HyperText Transfer Protocol). HTTP is a generic, stateless protocol defined in RFC 2616, published by the IETF (Internet Engineering Task Force) in June 1999. It can be used for many tasks beyond its use for hypertext, such as name servers and distributed object management systems, through extension of its request methods, error codes and headers. A feature of HTTP is the typing and negotiation of data representation, allowing systems to be built independently of the data being transferred. HTTP has been in use by the World-Wide Web global information initiative since 1990. It is also used nowadays by the WAP (Wireless Application Protocol) version 2.0, with some extensions called Wireless profiled HTTP, and by the i-mode™ specification.

It is assumed that the terminals 1-2 are each equipped with a Web browser and that the terminal 3 is equipped with a WAP or i-mode™ browser.

For transferring a document located on the Web server 9 or 10 to one of the terminals 1-3, a browsing session is opened. Such browsing session comprises a set of interactions between the user of said terminal and the document to be transferred. Said document, typically a Web page, can be of the HTML (Hyper-Text Markup Language) format for instance and can be identified in the HTTP protocol using a MIME (Multipurpose Internet Mail Extension) content type as well known in the art.

Concerning the mobile terminal 3, it must be noted that the WAP or i-mode^{™} browser it incorporates is largely similar to a Web browser. The only changes aim at leveraging the wireless access and the mobile capabilities like the screen size and/or color depth. Hence, it does not impact the browsing concept. Thus the method described below in the context of Web browsing applies to the WAP and i-mode™ browsing as well.

A browsing session generally comprises one or more transfer protocol transactions, e.g. HTTP transactions each involving a resource locator specifying the location of an object, e.g. a URL (Uniform Resource Locator) as well known in the art. Each HTTP transaction may introduce relationship with other URLs.

Five main relationships relating to HTTP transactions can be defined:
- a transport redirection (TR): this corresponds to the case when a request made on the URL redirects to another URL. Indeed, HTTP specifies some redirection mechanisms to indicate to the Web browser that the resource located at the requested URL has been displaced at another URL. The corresponding return codes used are in the 3xx class, except the "304 Not modified". The user-agent usually handles these redirections automatically and retrieves the document;
- an element (E): this corresponds to the case when the content located at the URL refers to the next URL as an element. Indeed, the combination of the Web content type used (like HTML, cHTML, WML, XHTML, etc.) and URL protocol specification allows Web page designers to embed images, animations, video, sound, and streaming media into a Web page, or to make them accessible through the Web page. To render properly a Web page, a Web browser has to fetch these embedded objects or other elements used inside the page, like style-sheets or script sources;
- an application redirection (AR): this corresponds to the case when the interaction with the Web browser triggered an application redirection. Indeed, a Web page may include some scripts like JavaScript or dynamic directives like Dynamic HTML. The scripts are processed and executed by a scripting runtime added to the Web browser. The execution may dynamically modify the document like its display or may even redirect the Web browser to another document located at specific URLs. The latter action is called an application redirection. For example, a JavaScript may display different images depending on the computer Operating System;
- an error retry (ER): this corresponds to the case when an HTTP transaction fails and the Web browser starts a new transaction on the same URL;
- a Head/Get request (HG): this corresponds to the case when an HTTP transaction made with a HEAD (see section 9.4 of RFC 2616) is followed by a GET (see section 9.3 of RFC 2616) on the same URL.

According to the invention, a trace is captured in a first step. This capture consists in acquiring a set of information exchanged on a communication interface. With reference to FIG.1, a trace can be captured on one of the links 4-5 and 7. In this case, the acquired information is relative to the information sent and received by one of the terminals 1-3 respectively. A trace can also be captured on an interface common to several users, for example an interface of the fixed network 6 or of the wireless network 8 (e.g. a Gb or Gn interface in a GPRS or UMTS network). A trace can also be captured on a link close to the server 9 or 10, which helps observing the information exchanged between said server and any user.

The captured information will generally consist in a number of non-truncated packets. These packets concern any TCP connection. In particular, in case of asymmetrical routing, the two ways should advantageously be captured. The trace should also be well synchronized. In this respect, the causalities introduced by the different protocol levels should preferably be verified. For instance, a TCP acknowledgment must arrive after the acknowledged data, a GTP Echo response must arrive after the GTP Echo Request, etc.

In a second step, the amount of information captured with the trace is processed. This step reconstructs all the TCP connections, identifies the HTTP transactions and records some information associated with each HTTP transaction. A database management system or other mediums can be used to memorize this information. For clarity reasons, we assume, in the following part, the usage of a database.

Preferably, all the modifications done by the transport level should have been reversed in this step. For instance, the HTTP protocol may chunk and compress the content during the transmission, so the memorized content should have been de-chunked and decompressed.

Moreover, all the information associated with the HTTP transactions should have been parsed and referenced into the database. This step parses the raw content according to its Mime-type: transport redirection (like the HTTP 302 return code), application redirection like the WML (Wireless Mark up Language) event "onenterforward/go" or "ontimer/go", objects referenced as sources inside the XHTML/HTML/WML page like images, style sheets, script source (JavaScript), plug-ins (Flash player), etc.

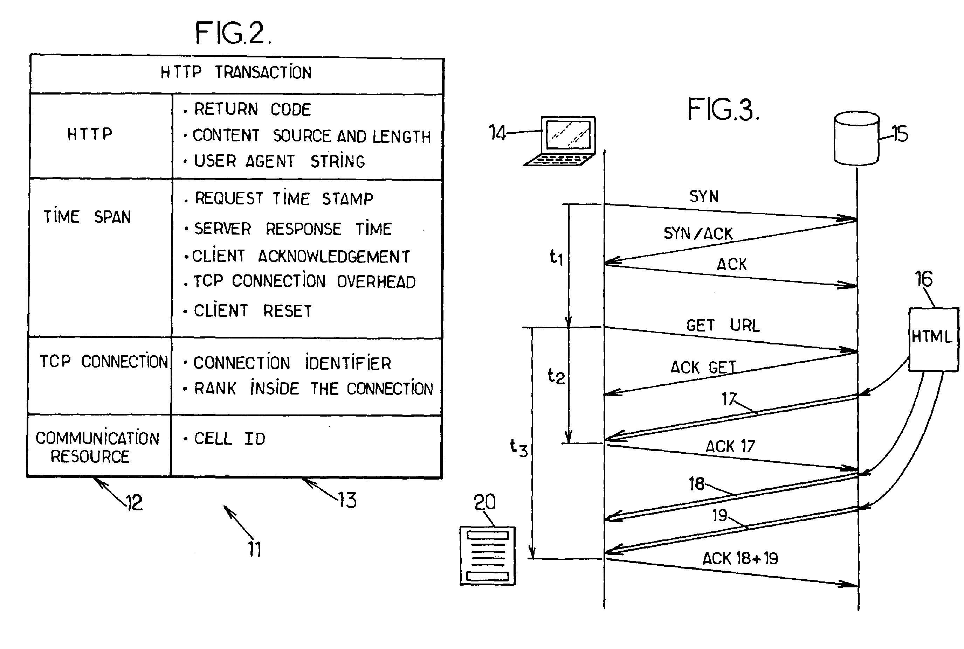

The different types of information associated with the identified HTTP transactions are detailed below with reference to FIG.2.

FIG.2 shows a table 11 filled for each identified HTTP transaction. The left column 12 of the table 11 comprises the categories of the information stored in the right column 13.

In the HTTP category, the memorized attributes of each HTTP transaction can comprise:
- a return code which is a status code returned in response to a request (see section 10 of RFC 2616);
- a content source (payload) and its length, and
- a user-agent string which identifies the involved client, i.e. the browser or the end user device incorporating the browser (like the terminals 1-3 of FIG.1).

Another category of attributes concerns time span information. As HTTP uses TCP as a transport layer, HTTP events can be associated with TCP time stamps. An HTTP transaction comprises an HTTP request that is usually followed by an HTTP response. The HTTP messages corresponding to the request and to the response may be split in multiple TCP segments while they are transferred on the network. In case of HTTP pipelining, a single TCP segment may even contain parts of multiple HTTP messages. The time span attributes associated with each HTTP transaction can comprise the following, as illustrated in FIG.2:
- request time stamp: this is the time stamp of the first TCP segment containing the start of the HTTP request ;
- server response time: if the server has issued a response to a request, this corresponds to the first TCP segment of the response. If the server has aborted the TCP connection by sending a reset, then the return code is set to 0 and the server response time is set to the time elapsed between the request and the reset;
- client acknowledgement: this is the time elapsed between the request and the first packet acknowledging the last TCP segment of the response;
- TCP connection overhead: this value is defined if the HTTP request is the first payload of the TCP connection. It corresponds to the time elapsed between the first packet with the SYN flag and the first payload packet;
- client reset : if the client resets the TCP connection, then this is the time between the request and the TCP packet containing the reset.

Apart from the request time stamp which is a date and/or time, the other parameters may be expressed in seconds. Of course, other time span information can be calculated and memorized in association with the corresponding HTTP transaction. For instance, a first request total time can be defined as the addition of the TCP connection overhead and the client acknowledgement time, if the HTTP request is the first payload of the socket. In other words, this is the time between the first SYN packet and the first acknowledgement of the last TCP segment of the response. This time, in seconds, reflects well the end-user interaction with its Web browser.

It should be noted that, depending on the interface on which the capture is made, measuring the time elapsed between two messages may result in different values. The major differences can be observed when the different networks traversed by the packets have not the same bandwidth and latency figures. For instance, a GPRS network comprises an access subsystem with low-bandwidth and high-latency followed by a packet core subsystem with high bandwidth and low-latency. Therefore, the time spans described above can have different sensitivities to the capture point. The sensitivity can be minimized by a smart choice of the messages. For instance, choosing the time between a SYN and an ACK is less sensitive to the transit time, because these two messages have the same size.

Another category of information associated with each HTTP transaction relates to the TCP connection. A TCP connection identifier as well as a rank of the HTTP transaction inside the connection can be memorized. These attributes help reconstructing the session within the framework of which the HTTP transaction was made. Typically, the connection identifier will comprise an IP source address and an IP destination address, as well as a source port and a destination port. Therefore, all the HTTP transactions relating to a particular user can be identified.

It must be noted that another user identifier could be used instead or in addition to the TCP connection identifier. For example, if the user has a mobile phone able to communicate with a wireless network, and if the captured interface allows it, the IMSI (International Mobile Subscriber Identity) can be used. The IMSI has the advantage that it uniquely identifies a subscriber, whereas an IP address could be used by several users successively according to the IP address allocation method.

Another category can optionally be used, according to the communication system in which the HTTP transactions are transmitted. This category concerns the communication resource. For example, when the capture is done on an interface of a cellular network, it can be interesting to memorize a Cell ID in association with each HTTP transaction, i.e. an identifier of the cell inside which the mobile browsing user is located. Such attribute can help matching indicators, like the time spans, with the communication resource of the system.

FIG.3 shows a simple TCP connection involving a terminal 14 equipped with a Web browser and a Web server 15. Several messages are then transmitted between the terminal 14 and the server 15, according to the TCP protocol, as defined in particular in the RFC 793, published by the IETF in September 1981.

First of all, the terminal 14 sends a message to the server 15, including a synchronize control flag (SYN). This message initiates the establishment of a TCP connection. It is then acknowledged by the server 15 (message SYN/ACK), which is itself acknowledged by the terminal 14 (ACK).

Then, the terminal 14 sends a GET URL, which is a GET message according to the HTTP protocol, by which it asks for the content identified by the URL. The server 15 sends an ACK GET for acknowledging the GET message. And then it retrieves the HTML content 16 stored in correspondence with said URL, and splits it in three different TCP segments 17-19 sent to the terminal 14.

Upon reception of the TCP segments, the browser of the terminal 14 can display the information received (display 20).

The TCP segment 17 is first acknowledged by the terminal 14 (ACK 17). Then, the two TCP segments 18 and 19 are simultaneously acknowledged by the terminal 14 (ACK 18+19).

The diagram of FIG.3 is a very simple example of what the captured trace could contain if done on a communication interface between the terminal 14 and the server 15.

The HTTP transaction illustrated in FIG.3 mainly consists in requesting a Web page. Some information associated with said HTTP transaction can be obtained from the capture of the corresponding messages as explained before. For instance, the time values t₁, t₂ and t₃ can be the TCP connection overhead, the server response time and the client acknowledgement time respectively. These values, as well as others as described above, can be memorized in a database in association with said HTTP transaction.

After the HTTP transactions have been identified and memorized with corresponding information, they can be associated with the session they belong to in a further step of the invention. Indeed, each HTTP transaction is performed within the framework of a communication session. At the end of this step, a list of HTTP transactions is available for each session. Each list is advantageously ordered by the request time stamp of the respective HTTP transaction.

For instance, for an Internet service (ASDL or modem), a session can be defined at the PPP (Point to Point Protocol) level. On wireless Internet, like GPRS or UMTS, a session can be defined as a PDP (Packet Data Protocol) Context in the Gn interface or the Radius accounting Start/Stop messages on the Gi interface. A more complex definition could be the PDP related to a specific IMSI on a given Access Point Name with a time span between two PDP contexts not greater than a specific value.

Every HTTP transaction is related to a session after this step. Some downloads may not be considered to reduce the capture effect. For example, all the end user transactions already running when the capture started can be discarded by the session link.

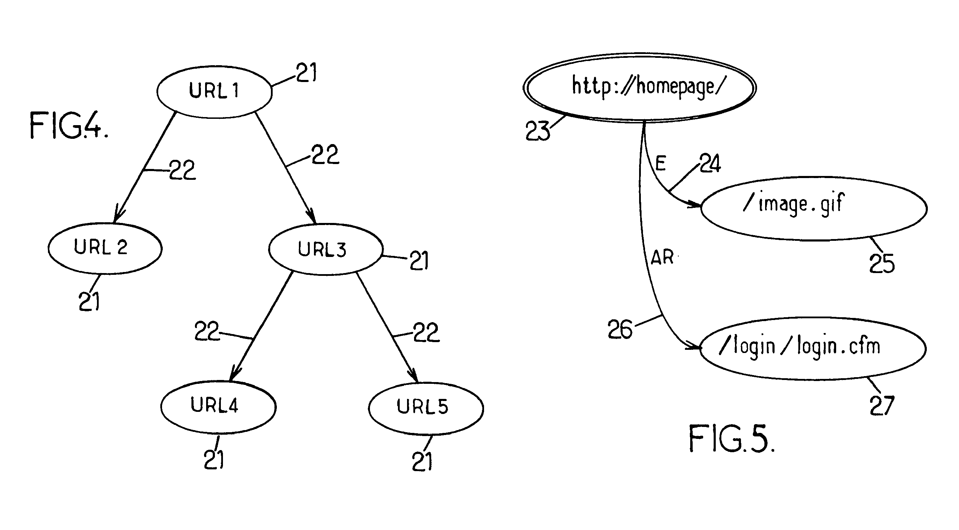

For each session, a graph is constructed. As illustrated in the example of FIG.4, each node 21 of the graph represents a URL (URL1-URL5) and each link 22 of the graph, connecting two nodes 21, represents a relationship between the connected nodes 21. The relationship (which can be TR, E, AR, ER or HG as defined above) relates to an HTTP transaction contained inside the session and involving the URL of at least one of the two connected nodes 21. For example, said relationship relates to an HTTP transaction involving the URL of the parent connected node 21.

Advantageously, when no HTTP transaction has been associated with a node, the latter is an "empty node". Such node can be represented without any background color for example. In the other cases, a background color can be put inside the node. The node is then "full".

The following objects can be defined at every stage of the graph construction:
- a reference node: it represents the current location of the Web page retrieved by the client. It is evolving with each HTTP transaction placed on the graph, starting from the root node of the graph;
- a main node: this node is the one representing the "real" location of the Web page requested by the end user. It is determined by starting from the root node of the graph and by following all the links except the elements (E) as defined above;
- a Next transactions list: this list is constructed starting from any node N. If N is empty, then the list is N. If N is full, then the list is composed of all the empty nodes that are reachable from N by going through full nodes only; and
- a Last transactions list: this list can be constructed for any node N. If N is empty, then the list is empty. If N is full: if at least one of the under nodes is full, then the list is composed of all the nodes preceding the nodes in the Next transactions list except N. If all the under nodes are empty, then the list is N.

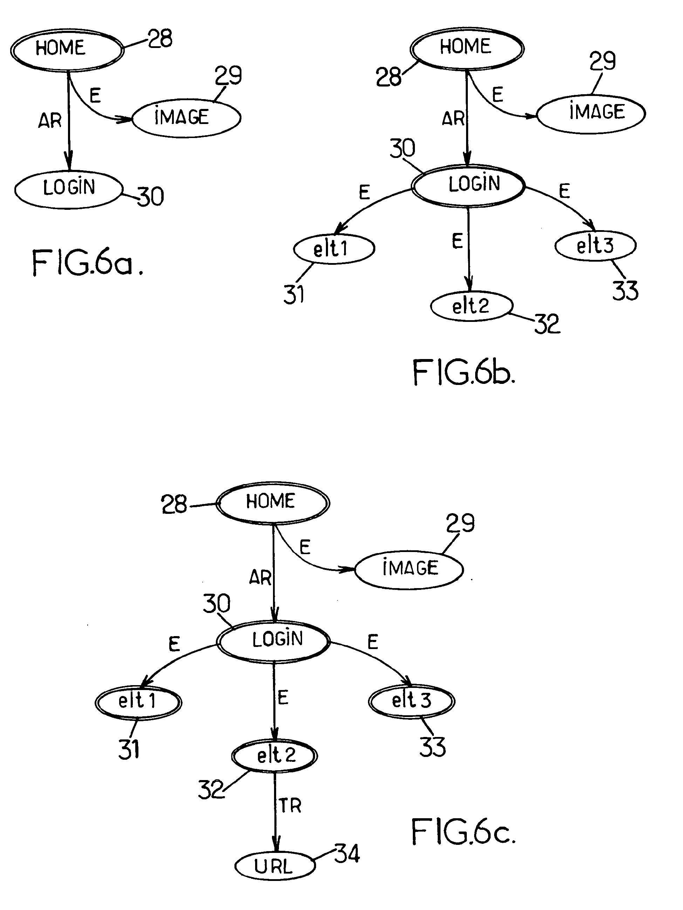

With reference to the example illustrated in FIG.5, the reference node 23 of the graph gives the URL representing the current location of the Web page retrieved by the client, i.e. "http://homepage/". This node 23, which is full (this is represented by a double circle around the node), is also the Last transactions list of the reference node, the two other nodes 25 and 27 being empty (this is represented by a single circle around these nodes).

The URL of the node 23 refers to the next URL "/image.gif" of the node 25 as an element. The link 24 between the nodes 23 and 25 is of the E type.

An application redirection is then triggered by the browser from the homepage, as shown by the link 26 of the AR type. The URL pointed at by the redirection is the one of the main node 27, i.e. "/login/login.cfm".

The nodes 25 and 27 are part of the Next transactions list of the reference node 23.

Different actions must be completed during the graphs construction, according to the type of HTTP transaction being processed. For example, for an HTTP transaction of the error retry (ER) type, once the HTTP transaction has been made on a URL that belongs to the Last transaction list and which corresponds to a node called the linked node, a new node is inserted between the linked node and its children, with the same URL as the linked node.

For an HTTP transaction of the Head/Get (HG) type, once the HTTP transaction has been made on a URL that belongs to the Last transaction list and which corresponds to a node called the linked node, the current request method being a GET and the one used in the HTTP transaction associated with the linked node being a HEAD, a new node is placed below the linked node.

Another possible action is to render a node full, by associating an HTTP transaction with a node which was empty previously. This can happen when the current HTTP transaction has been made on an URL that belongs to the Next transactions list.

When an HTTP transaction is not yet in a graph, a new graph is created and this transaction becomes the root node of the new graph. This can happen when the corresponding URL does not match any node inside the Next transactions list.

By contrast, when the URL corresponding to the current HTTP transaction matches an empty node of the current graph that is not in the Next transactions list or of any of the previous graphs, then the transaction can advantageously be ignored. This operation aims at simulating the cache mechanism involved when the user uses the "history" feature of its browser or preventive background downloads.

When an HTTP transaction has been placed on a current graph, an update may be needed, depending on the transaction properties. If content is associated with the transaction, then the elements or the application redirection link are added to the graph. If the transaction is a transport redirection, then a new node with the URL advertised by the redirection is added. If the node linked with the transaction is the reference node and if it is linked by anything but an element branch, then the current node becomes the new reference node.

FIG.6a-FIG6c give an example of construction and update of a graph according to the invention. FIG.6a corresponds to the situation illustrated in FIG.5 described above. In FIG.6a, the reference node is the node 28. An update is then performed after a second request is made against the login (displayed as "login").

As shown in FIG.6b, the associated content includes three elements elt1, elt2 and elt3 and the reference node jumps from home (node 28) to login (node 30). First, the nodes 31-33 relating to said elements are empty nodes, and then they are rendered full after the corresponding E type HTTP transactions are processed.

As shown in FIG.6c, the element elt2 is then redirected to another URL, so that a new node 34 is inserted at the end of the added TR (transport redirection) link.

When all the graphs have been constructed according to the method described above, it is possible to proceed with the determination of the final status of each transaction placed on the graphs. The "subsequent transaction" notion is defined to designate the case where there exists another download placed on the same graph with a higher rank or where there exists another graph following the current one. This notion is mainly used to distinguish the transactions that have been interrupted compared to the one that have simply failed. Another notion called "socket end" is defined to designate the case when it has been detected, inside the captured trace, TCP signaling indicating the closure of the TCP connection or when there has been no traffic at all inside this connection for a certain time.

Then, each HTTP transaction can be assigned one of the following statuses:
- success: the HTTP transaction has been performed successfully and completely. The response has been completely received by the client;
- in progress: the server has not yet responded or the client has not acknowledged everything and the end of the socket has not been seen yet;
- interrupted: a problem occurred with the HTTP transaction but there has been a subsequent transaction made by the client;
- failure: all the other cases.

In a further step, browsing information is derived from at least one of the constructed graphs. This information can be various depending on what the targeted application is.

A first set of applications aims at determining various indicators, such as performance indicators, advantageously from an end user point of view.

For example information concerning the status, time and size of a Web page download can be derived from the constructed graphs. The time to download the Web page can be determined as the maximum time elapsed between the request time stamp of the root node and the request time stamp and the time span of any other node of the graph.

The size of the Web page download can be obtained by summing the size of download for each HTTP transaction as seen on the network or by summing the size of decompressed download content as provided to the Web browser by the HTTP layer.

The status of the Web page download can be determined as a combination of the different statuses of the HTTP transactions of a graph. Not all the HTTP transactions may be considered and they may not count equally in the final status. To this effect, the status, as far as the main node, is first determined and then, if it is successful, elements are included. The status of the root node completely determines the general status if different from success. The nodes down to the main node completely determine the general status if their status is "failure". In the other cases, the general status is determined by the "element inclusion" rule.

The "element inclusion" rule can be defined by the following steps. First, the status of all the sub-nodes of the main node is considered. The other nodes of the graph are ignored. If the status of all the transactions is "success", then the general status is "success". If the status of one of the transactions is "in progress", then the general status is set to "in progress". If the status of one of the transactions is "interrupted", then the general status is set to "interrupted". In the other cases, the general status is "failure".

In a second application example, the indicators derived from the constructed graphs relate to an inter-transaction time and/or a Web page reading time. The inter-transaction time can be defined as the time elapsed between the two request time stamps of two graphs minus the Web page download time.

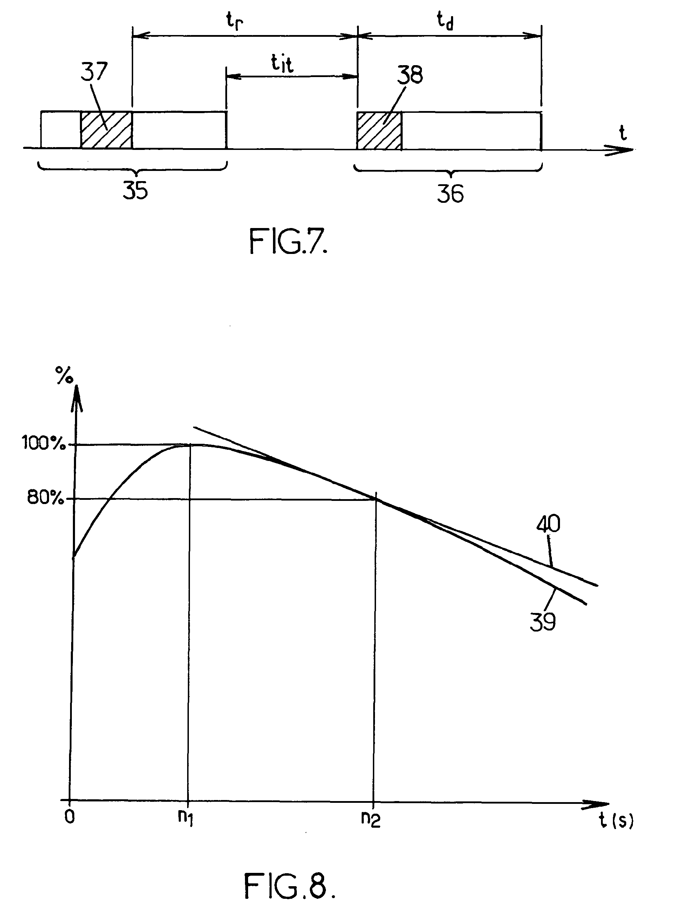

FIG.7 illustrates such situation. In this figure, two successive Web page downloads 35 and 36 have been represented. During each download, there is a respective HTTP transaction of the main node (37 and 38). The inter-transaction time is the time tᵢₜ between the two successive downloads. The time tᵣ also represented in FIG.7, between the end of the first HTTP transaction 37 and the beginning of the second HTTP transaction 38 is assimilated to the reading time of the first downloaded Web page 35. The time t_{d} also represented is the download time for the second Web page 36.

The determination of the inter-transaction time and/or the Web page reading time relies on the ability to determine which URLs should be considered as elements, i.e. would be automatically downloaded by the user-agent to properly render the content. As there are cases where these URLs can not be determined or as the implementation may fault, an incertitude indicator is advantageously defined.

As a hypothesis, each transaction is triggered by a human input. After each successful transaction the user-agent has to render the content and the end user has to read it. For each successful transaction the user has been waiting for the whole content without interrupting it, so it is postulated that it will take some time to digest and react to this content. Thus the time between a successful transaction and the next one should be greater than a "reading threshold". If the time elapsed between the transactions is under this threshold, this means that the request has not been triggered by the end user but rather by the user-agent. In such a case the transaction should belong to the graph: a node has been missed.

The percentage of the transactions meeting the conditions described above and having an inter-transaction time under the reading threshold can be considered as an incertitude indicator which measures the quality of the implementation. For example, the reading threshold could be between 0.1 and 0.5 second.

As for the reading time of a Web page, it is the time elapsed between the request time stamp of the main node (or the nearest parent) and the request time stamp of the root node of the next graph minus the longest time span. This definition takes into account that the end user starts to read the Web page as soon as all the redirections have been resolved and the main page has been received and displayed.

In another application of the invention, the information derived from the constructed graphs pertains to Web browser characteristics. Indeed, the Web browser characteristics are related to the time elapsed to go from a node to another node of a graph. A statistical analysis filtered by user-agent string can establish a characteristic value for each user-agent. The performances of different Web browsers can thus be compared.

The derived Web browser characteristics can be one of the following:
- the time to resolve a Head : this concerns two nodes linked with a HG link. The time span corresponds to the time to interpret the HTTP headers received inside the response and to decide to retrieve the resource with a GET. The TCP offset of the GET may be suppressed to better reflect the characteristic;
- the time to resolve an HTTP redirection: this concerns two nodes linked with a TR link. The time span corresponds to the time to interpret the HTTP headers received inside the response and to retrieve the resource with a GET. The TCP offset of the GET may be suppressed to better reflect the characteristic;
- the time to parse the content: this concerns two nodes linked with an E link. If we consider only the time elapsed between the parent node and the first children node (in terms of HTTP transactions), we have the time to parse the content up to the first element;
- the internal architecture: some characteristics/features of the internal architecture of the Web browser may be directly guessed out of the trace. For instance: "HTTP pipelining" if there are HTTP transactions on the same socket not in STOP & WAIT mode, "HTTP connection multiplexing" if multiple TCP connections are opened in parallel in STOP & WAIT mode to retrieve the elements, etc.

Of course, most of the indicators derived from the constructed graphs can be obtained either for one particular user or group of users, e.g. according to their user-agent string, or for a plurality of users on a statistical basis.

The performance indicators obtained in this way are quite accurate compared to what could be with traditional performance tools like end-user test equipments, in particular when they are obtained on a statistical basis.

In an advantageous application of the invention, performance indicators are obtained in relation with the communication resource used, when such information has been memorized in association with the corresponding HTTP transactions. It is thus possible to compare the browsing performances according to the communication resource used. This can help detecting bad resource allocation in the communication system for instance and evaluating its impact on the end user.

FIG.8 shows an example of a complex indicator or function which can be derived from the constructed graphs. The curve 39 represents an impatience function in which with each time value (in seconds), it is associated a percentage of the pages completely downloaded after said time value, without having been interrupted. For example, 100% of downloads are complete at n1 seconds, which means that nobody interrupts a download at this time. Indeed, the download errors (e.g. wrong URL requested) are detected and then stopped before n1. On the other hand, all users are patient enough to wait for n1 seconds without interrupting their download. Conversely, out of all the downloads performed within n2 seconds only 80% are complete pages, 20% being uncomplete pages, the download of which being volontarily interrupted by the users after n2 seconds. Which means that the impatience of the users on this network can be well characterized by this curve. The impatience function could be estimated by the gradient of the straight line 40.

Such information obtained from the graphs can be very useful for the network carriers or service providers to better know the behavior of users. They can thus adapt the dimensioning of their network or services accordingly.

Of course, other information could be derived from the graphs.

The graphs can also be used in many other applications. For example, the browsing information can help detecting troubleshooting and diagnosing it. Indeed, the graphs analysis can directly pinpoint a problem and offer the complete scenario. When the graphs construction and analysis are made in real or quasi real time, the identified problem can be repaired quickly, thereby limiting customer dissatisfaction.

Another application could be the operational validation of a change in the communication system including said communication interface, on the user side or on the server side for instance.

Another application could concern the billing. For instance, wireless operators can bill their customers on a Web page basis instead of an HTTP level. This enables to create an end user transaction based billing model, service level agreement, etc.

In terms of implementation, the operations described above can be carried out in a device or system, which is at least partly connected to the captured interface.

A computer program can also comprise code instructions for implementing the method described above, when it is loaded and executed by computer means.

## Claims

1. Method for analyzing browsing, said browsing taking place within the framework of at least one communication session carried by at least one communication interface, said at least one communication session comprising at least one transfer protocol transaction involving a resource locator, the method comprising the following steps:
/a/ capturing a trace on said communication interface;
/b/ identifying at least one transaction from the trace and memorizing each identified transaction with associated information;
/c/ associating each identified transaction with the session it belongs to;
/d/ for each session, constructing a graph, each node (21) of the graph representing a resource locator and each link (22) of the graph, connecting two nodes, representing a relationship between said two nodes, said relationship relating to a transaction associated with said session and involving the resource locator represented by at least one of said two nodes; and
/e/ deriving browsing information from at least one of the constructed graphs.

2. Method as claimed in claim 1, wherein the information associated with the transactions comprise indications of at least some of: a status, a content, a user-agent, a time stamp, a response time of a server, a time elapsed between a request and an acknowledgement, a time for starting a connection, a time for ending a connection, a connection identifier and a rank inside the connection.

3. Method as claimed in claim 1 or 2, wherein the information associated with the transactions comprises information of communication resource on which the transactions are carried out.

4. Method as claimed in any one of the foregoing claims, wherein the browsing information derived from at least one of the constructed graphs comprises performance indicators from an end user point of view.

5. Method as claimed in any one of the foregoing claims, wherein the browsing information derived from at least one of the constructed graphs comprises at least one of: a download status, a download time, a download length, an inter-transaction time and a download reading time.

6. Method as claimed in any one of the foregoing claims, wherein the browsing information derived from at least one of the constructed graphs comprises browser characteristics.

7. Method as claimed in any one of the foregoing claims, wherein the browsing information derived from at least one of the constructed graphs comprises an impatience function (39) defined as the proportion of users who stop a download after a number of seconds.

8. Method as claimed in any one of the foregoing claims, wherein the browsing information derived from at least one of the constructed graphs is statistically obtained in relation with a plurality of users.

9. Method as claimed in any one of claims 1 to 7, wherein the browsing information derived from at least one of the constructed graphs is obtained for one or a predetermined group of users.

10. Method as claimed in any one of the foregoing claims, further comprising a step of detecting a troubleshooting or validating the configuration in a communication system including said communication interface, from said derived browsing information.

11. Method as claimed in any one of the foregoing claims, further comprising a step of defining a transaction based billing from said derived browsing information.

12. Computer program product comprising code instructions for implementing the method as claimed in any one of claims 1 to 11, when it is loaded and executed by computer means.

13. Device comprising means for implementing the method as claimed in any one of claims 1 to 11.
